## Europäisches Patentamt

## European Patent Office

## Office européen des brevets

(19)

(11) Veröffentlichungsnummer: **0 113 020**
**B1**

(12) **EUROPÄISCHE PATENTSCHRIFT**

(45) Veröffentlichungstag der Patentschrift:
**12.08.87**

(21) Anmeldenummer: **83111695.9**

(22) Anmeldetag: **23.11.83**

(51) Int. Cl.⁴: **C 08 G 18/30,** C 08 G 18/65,
C 08 G 18/50, C 08 G 18/40

(54) **Aminogruppen enthaltende Reaktionskomponenten, Verfahren zu ihrer Herstellung und ihre Verwendung.**

(30) Priorität: **04.12.82 DE 3244913**

(43) Veröffentlichungstag der Anmeldung:
**11.07.84 Patentblatt 84/28**

(45) Bekanntmachung des Hinweises auf die Patenterteilung:
**12.08.87 Patentblatt 87/33**

(84) Benannte Vertragsstaaten:
**BE DE FR GB IT NL**

(56) Entgegenhaltungen:
**DE-A-2 948 419**
**FR-A-1 308 345**

(73) Patentinhaber: **BAYER AG, Konzernverwaltung RP Patentabteilung, D-5090 Leverkusen 1 Bayerwerk (DE)**

(72) Erfinder: **Rasshofer, Werner, Dr., Wolfskaul 10, D-5000 Köln 80 (DE)**

EP 0 113 020 B1

LIBER, STOCKHOLM 1987

## Beschreibung

Gegenstand der Erfindung ist ein wesentlich vereinfachtes Verfahren zur Herstellung von höhermolekularen Polyaminen durch Hydrolyse von Isocyanatverbindungen, bei welchem in einer Eintopfreaktion die Ausgangskomponenten Polyisocyanate, höhermolekulare Polyhydroxylverbindungen, z. B. Polyetherpolyole, und gegebenenfalls niedermolekulare Kettenverlängerungsmittel, z. B. Diole oder Polyole, in Gegenwart von überschüssigen Mengen an Wasser und bestimmten basischen Katalysatoren, gegebenenfalls in Gegenwart von zumindest zum Teil wassermischbaren Lösungsmitteln, bei -20 bis 175°C miteinander vermischt und gegebenenfalls auf 20 bis 175°C erwärmt werden. Dabei reagieren während des Verfahrens - zumindest teilweise - die Ausgangsstoffe unter Urethanverknüpfung, wobei gleichzeitig und/oder anschließend NCO-Gruppen zu $NH_2$-Gruppen verseift werden.

Erfindungsgegenstand sind auch derart hergestellte, höhermolekulare, Aminogruppen, gegebenenfalls noch andere, gegenüber NCO reaktive Gruppen (insbesondere OH-Gruppen aus den Polyhydroxylverbindungen oder Kettenverlängerungsmitteln) und Urethanverknüpfungen aufweisende Polyaminoverbindungen, sowie ihre Verwendung als Ausgangskomponente im Polyisocyanat-Polyadditionsverfahren zur Herstellung von homogenen, zellulären oder geschäumten Polyurethanen.

Verfahren, bei denen die Aminogruppen von Polyaminen aus NCO-Gruppen von Polyisocyanaten oder vorgebildeten NCO-Voraddukten entstehen, sind bereits beschrieben.

So ist es bekannt, daß aromatische Isocyanate durch saure Hydrolyse in primäre aromatische Amine überführt werden können. Die Reaktion verläuft allerdings nur sehr unvollständig, da das bei der Hydrolyse gebildete Amin mit noch nicht umgesetztem Isocyanat zum entsprechenden Harnstoff weiterreagiert. Diese Folgereaktion läßt sich auch durch Anwendung überschüssiger starker Mineralsäure nicht unterdrücken. Ein neueres Beispiel dieser Verfahrensweise findet sich in der JP-PS 55 007-827.

Die saure Hydrolyse von aliphatischen monomeren Isocyanaten mit Dimethylsulfoxid/Salzsäure zu Aminen wurde von Walker und Pinches in "Analyst", 104, 928-936 (1979) zu einer Nachweismethode für aliphatische Isocyanate ausgearbeitet. Die den gegebenenfalls modifizierten Isocyanaten oder Prepolymeren zugrundeliegenden Amine, z. B. Hexamethylendiamin aus biuretisiertem Hexamethylendiisocyanat, werden derivatisiert und fotometrisch die Konzentration bestimmt.

In der DE-B 1 270 046 wird ein Verfahren zur Herstellung definierter, Polyalkylenglykolether-Segmente enthaltender, primärer aromatischer Amine beschrieben, bei dem man Umsetzungsprodukte von aromatischen Di- oder Triisocyanaten mit Polyalkylenglykolethern und/oder Polyalkylenglykolthioethern, vorzugsweise solchen mit Molekulargewichten zwischen 400 und 4000, mit sekundären oder tertiären Carbinolen umsetzt und anschließend (gegebenenfalls in Gegenwart saurer Katalysatoren) in einem inerten Lösungsmittel einer thermischen Spaltung bei hohen Temperaturen unterwirft. Nachteilig ist dabei neben der hohen Spalttemperatur, daß im Verlauf der thermischen Spaltung der Urethane brennbare, leicht flüchtige Alkene entstehen, die im Gemisch mit Luft explosiv sind, so daß entsprechende Vorsichtsmaßnahmen getroffen werden müssen.

Gegenstand der DE-B 1 694 152 ist die Herstellung von mindestens 2 endständige Aminogruppen aufweisenden Prepolymeren durch Umsetzung von überschüssigen Mengen an Hydrazin, Aminophenylethylamin oder anderen Diaminen mit einem NCO-Prepolymer aus einem Polyetherpolyol und Polyisocyanat (NCO:NH-Verhältnis = 1:1,5 bis 1:5). Nicht umgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner auftritt.

Eine andere Synthesemöglichkeit für Urethangruppen aufweisende Polyamine wird in der FR-PS 1 415 317 beschrieben. Urethangruppenhaltige NCO-Prepolymere werden mit Ameisensäure in die N-Formylderivate überführt, die zu endständigen aromatischen Aminen verseift werden.

Auch die Reaktion von NCO-Prepolymeren mit Sulfaminsäure gemäß DE-B 1 155 907 führt zu Verbindungen mit endständigen Aminogruppen. Desweiteren werden höhermolekulare, aliphatische, sekundäre und primäre Aminogruppen aufweisende Voraddukte nach DE-B 1 215 373 durch Umsetzung höhermolekularer Hydroxylverbindungen mit Ammoniak in Gegenwart von Katalysatoren unter Druck bei hohen Temperaturen erhalten oder sind gemäß US-PS 3 044 989 oder DE-B 1 193 671 durch Umsetzung höhermolekularer Polyhydroxylverbindungen mit Acrylnitril unter anschließender katalytischer Hydrierung zugänglich. Polyoxyalkylenpolyamine sind gemäß US-PS 3 236 895 auch durch Aminierung mittels Ammoniak via Sulfonsäureestern von Polypropylenglykol zugänglich. Auch die Umsetzung von einem Polyalkylenglykol mit Epichlorhydrin und nachfolgender Reaktion mit einem Überschuß eines primären Amins nach FR-PS 1 466 708 zu sekundäre Aminogruppen aufweisenden Produkten ist bekannt. Auch durch Umsetzung von NCO-Prepolymeren mit Hydroxylgruppen aufweisenden Enaminen, Aldiminen oder Ketiminen und anschließende Hydrolyse erhält man gemäß DE-A 2 546 536 bzw. US-PS 3 865 791 höhermolekulare, endständige Aminogruppen und Urethangruppen aufweisende Verbindungen. Eine weitere Synthesemöglichkeit für Urethan- und Ethergruppen aufweisende aromatische Polyamine liegt in der bei der Reaktion von Isatosäureanhydrid und Diolen eintretenden Ringöffnung. Solche Polyamine sind z. B. in der US-PS 4 180 644 und den DE-A- 2 019 432, 2 619 840, 2 648 774 und 2 648 825 beschrieben. Nachteilig für viele Zwecke ist die geringe Reaktivität der solcherart erhaltenen, aromatischen Esteramine.

Auch die Reaktion von Nitroarylisocyanaten mit Polyolen und nachfolgender Reduktion der Nitrogruppen zu aromatischen Amingruppen ist bekannt (US-PS 2 888 439).

Auch durch Umsetzung von Benzylalkohol mit NCO-Verbindungen mit aliphatischen oder aromatischen NCO-Gruppen zu Benzylurethanen und nachfolgender katalysierter Hydrogenolyse lassen sich Polyamine herstellen (DE-A 30 35 639). Nachteilig bei diesen beiden Verfahren sind vor allem die hohen Kosten des unter Druck auszuführenden Reduktionsschrittes.

In der FR-A 1 308 345 (DE-B 1 243 309) wird ein Verfahren zur Herstellung von Oberflächenbeschichtungen aus Polyurethanen beschrieben, wobei man Polyisocyanate und Verbindungen mit zwei oder mehreren, gegenüber NCO reaktiven Wasserstoffen, unter Zusatz einer gewissen Wassermenge von mindestens 0,5 Gew.-%, bezogen auf die Verbindungen mit den reaktiven Wasserstoffen, zur Umsetzung bringt, wobei durch die anteilige Wassermenge größere Härte der Oberflächenbeschichtungen ohne von Schaum- oder Blasenbildung erzielt wird. Die Menge der Polyisocyanate ist vorzugsweise im wesentlichen der theoretischen äquivalent Menge, die sich aus den Verbindungen mit reaktiven Wasserstoffatomen und dem mitverwendeten Wasser ergibt. (2. Seite, rechte Spalte, 4. Absatz). Gegebenenfalls können in geringen Mengen Katalysatoren wie tertiäre Amine, mitverwendet werden.

Es ist auch bekannt, daß gewisse heteroaromatische Isocyansäureester durch basische Hydrolyse in heteroaromatische Amine überführt werden können. Die bei H. John, J. Prakt. Chemie 130, 314 f bzw. 332 f (1931) für zwei ganz bestimmte, heteroaromatische Monoisocyansäureester genannten Hydrolysebedingungen sind aber für die Überführung von Poly-NCO-Verbindungen in aliphatische und/oder aromatische Amine nicht nur völlig ungeeignet, sondern darüber hinaus auch gefährlich.

Daneben existiert noch in N.V. Sidgwick, The Organic Chemistry of Nitrogen, Clarendon Press, Oxford, 1966, S. 236, ein Hinweis auf die alkalische Hydrolysierbarkeit von NCO-Gruppen, der jedoch völlig unspezifisch und allgemein gehalten ist.

Gegenstand eigener Vorschläge nach den DE- 2 948 419, 3 039 600 und 3 112 118 sind mehrstufige Verfahren zur Herstellung von Polyaminen durch alkalische Hydrolyse von NCO-Voraddukten mittels überschüssiger wäßriger Alkalihydroxide bei niedrigen Temperaturen zu Carbamaten, Ansäuern mit der Basenmenge äquivalenten oder mit über die Basenmenge hinaus überschüssigen Mengen an Mineralsäuren oder sauren Ionenaustauscherharzen unter $CO_2$-Entwicklung, gegebenenfalls Neutralisation überschüssiger Säuremengen mittels Basen und anschließende Isolierung der Polyamine. Die Carbamate können auch thermisch (ohne Säurezusatz) direkt zerlegt werden und ergeben so in einfacher Weise die Polyamine.

Die hier beschriebenen Verfahren zur Herstellung von Polyaminen sind alle aufwendig. Selbst bei dem zuletztgenannten, bereits einfacheren Verfahren zur Umwandlung von Polyisocyanaten in Polyamine wäre noch eine weitere entscheidende Vereinfachung wünschenswert, um zu Polyaminen in wirtschaftlich noch günstigerer Weise zu gelangen. Bei diesem Verfahren werden nämlich aus Polyolen und monomeren Polyisocyanaten zuerst NCO-Prepolymere hergestellt, die dann, wie oben skizziert, hydrolysiert werden. Ein großer Teil der bei der Herstellung der Amine nach diesem Verfahren anfallenden Kosten liegt in der Herstellung, Lagerung und Handhabung des NCO-Prepolymeren begründet.

Es war daher Ziel der Erfindung, ein wirtschaftlich attraktives Verfahren zur Herstellung von höhermolekularen Polyaminen zur Verfügung zu stellen, bei dem man auf die erste Stufe der separaten Herstellung von NCO-Prepolymeren, welche anschließend in zweiter Stufe zu Polyaminen hydrolysiert werden, verzichtet und statt dessen die Ausgangskomponenten für eine NCO-Prepolymerbildung in Gegenwart von überschüssigen Mengen Wasser, bestimmten basischen Katalysatoren und gegebenenfalls zumindest teilweise wassermischbaren Lösungsmitteln vermischt und überraschenderweise in diesem Eintopfverfahren in nebeneinander ablaufenden Reaktionen gleichzeitig einen Aufbau von Polyisocyanaten mit Polyhydroxylverbindungen unter Urethanverknüpfung und eine NCO-Hydrolyse zu Aminen erzielt. Es werden nach diesem Verfahren Aminoendgruppen aufweisende, höhermolekulare Polyamingemische erhalten, welche gegebenenfalls noch weitere endständige, gegenüber Isocyanaten reaktive Gruppen, vorzugsweise OH-Gruppen, aufweisen und ähnlich den in DE-A 2 948 419, 3 039 600 und 3 112 118 beschriebenen Polyamin-Verfahrensprodukten sich als Reaktionskomponenten bei der Herstellung von Polyurethanen nach dem Diisocyanat-Polyadditionsverfahren einsetzen lassen. Die Polyamine nach den vorliegenden Erfindungen können auch wesentlich einfacher als für die Aufarbeitung der Hydrolysenprodukte nach DE-A 2 948 419, 3 039 600 und 3 112 118 beschrieben, erhalten werden.

Gegenstand der Erfindung ist somit ein Verfahren zur Herstellung von höhermolekularen, über Urethangruppen mit Segmenten aus höhermolekularen Polyether-, Polyester-, Polycarbonat- oder Polyacetalpolyolen und gegebenenfalls Resten von niedermolekularen Verbindungen mit gegenüber Isocyanaten reaktiven Endgruppen verknüpften aromatischen Polyaminen durch basische Hydrolyse von Isocyanatverbindungen, dadurch gekennzeichnet, daß man

A) in einem Eintopfverfahren bei Temperaturen von -20 bis +175° C, vorzugsweise +20 bis 130° C,

a) Polyisocyanate, vorzugsweise Diisocyanate, mit einem NCO-Gehalt von 21 bis 52,5 Gew.-%, vorzugsweise 30 bis 48,3 Gew.-%, und vorzugsweise aromatisch gebundenen NCO-Gruppen,

b) höhermolekulare, zwei- oder mehrwertige Verbindungen mit gegenüber Isocyanaten reaktiven Gruppen und

einem Molekulargewicht zwischen 400 und 10 000, vorzugsweise 500 bis 6000, vorzugsweise zwei- bis vierwertigen, besonders bevorzugt zwei- bis dreiwertigen Polyether-, Polyester-, Polycarbonat-, Polyacetal-Polyolen,

gegebenenfalls in Gegenwart von

c) niedermolekularen, zwei- oder mehrwertigen, vorzugsweise zwei- bis dreiwertigen, gegenüber

3

0 113 020

Isocyanaten reaktiven Verbindungen, vorzugsweise Di- und/oder Polyolen, mit einem Molekulargewicht von 62 bis 399, vorzugsweise 62 bis 250, mit

d) überschüssigen Mengen an Wasser, bezogen auf die NCO-Gruppen, gegebenenfalls in Gegenwart von

e) zumindest teilweise mit Wasser mischbaren Lösungsmitteln und in Gegenwart von

f) Alkalihydroxiden, Erdalkalioxiden, Erdalkalihydroxiden, Alkalicarbonaten, Erdalkalicarbonaten, Alkalihydrogencarbonaten, Alkali- und Erdalkalicarboxylaten einwertiger Carbonsäuren, Ammoniumcarbonat, Ammoniumhydrogencarbonat, Ammoniumcarboxylaten und Tetra-($C_1$-$C_{18}$-alkyl) ammonium-carbonat, -hydrogencarbonat, -carboxylaten und -hydroxid, Alkali- und Erdalkalisalzen von Kieselsäure, Blausäure, Cyansäure, Thiocyansäure, Isocyansäure, Isothiocyansäure und Schwefelwasserstoff, die in Wasser stark basisch reagieren, als basische Katalysatoren in einem NCO/XH-Äquivalentverhältnis (X = O, NH) von a:b = 0,1 bis 5, vorzugsweise 0,5 bis 2 bzw.

a:(b + c) = 0,1 bis 5, vorzugsweise 0,5 bis 2 und in einem $H_2O$/NCO-Verhältnis (d:a) von > 1:1, vorzugsweise > 10:1, vermischt,

B) gegebenenfalls das Reaktionsgemisch, bevorzugt unter Rühren, auf +20°C bis +175°C, vorzugsweise 60 bis 100°C, erwärmt und

C) das höhermolekulare Polyamin-Reaktionsprodukt durch Phasentrennung oder Extraktion aus dem Reaktionsgemisch oder vorzugsweise durch Abdestillieren flüchtiger Anteile aus dem Reaktionsgemisch, als Rückstand isoliert.

Gegenstand der Erfindung sind auch die nach dem erfindungsgemäßen Verfahren hergestellten, 0,1-25 Gew.-% Aminogruppen aufweisenden Reaktionsprodukte. Weiterer Erfindungsgegenstand ist die Verwendung dieser Aminogruppen enthaltenden, höhermolekularen Reaktionsprodukte als Ausgangskomponente bei der Herstellung von Polyurethanen nach dem Polyisocyanat-Polyadditionsverfahren.

Diese Reaktionsprodukte gemäß dem erfindungsgemäßen Verfahren bestehen im allgemeinen aus folgenden Komponenten:

- Einer Hauptmenge aus einem Produkt mit endständigen Aminogruppen, wie es im Prinzip auch durch Prepolymerhydrolyse gemäß DE-A 29 48 419, DE-A 30 39 600 und DE-A 31 12 118 erhältlich ist,

- einer gewissen Menge der gegenüber Isocyanaten reaktive Gruppen aufweisenden Verbindungen b) und/oder c),

- einem niedermolekularen Polyamin, wie es durch Hydrolyse der NCO-Gruppe des im erfindungsgemäßen Verfahren eingesetzten niedermolekularen Polyisocyanats in Aminogruppen zustandekommt,

- ferner ist in untergeordneten Anteilen auch eine nur einseitige Verknüpfung von b) oder c) mit a) vorliegend, d.h. es liegen auch Aminoalkoholderivate vor.

Die nach dem erfindungsgemäßen Verfahren herstellbaren Reaktionsprodukte sind, vergleicht man sie mit den Verfahren gemäß der oben zitierten Auslegeschriften, wesentlich preiswerter herzustellen. Sie weisen darüber hinaus folgende Vorteile auf:

- Sie sind, verglichen mit den bekannten Produkten, wesentlich dünnflüssiger und damit leichter verarbeitbar,

- sie weisen, bei der Verarbeitung zu geschäumten und ungeschäumten Kunststoffen auf Polyurethanbasis gute mechanische Eigenschaften auf, die mit denjenigen vergleichbar sind, die unter alleiniger Verwendung von Aminopolyethern gemäß der zitierten Offenlegungsschriften oder einer Abmischung aus Aminopolyethern und anderen, höhermolekularen, gegenüber Isocyanaten reaktive Gruppen (sog. "H-aktive Gruppen") aufweisende Verbindungen, z. B. Hydroxypolyethern, erhalten werden.

Die Umwandlung der niedermolekularen Polyisocyanate in Gegenwart der höhermolekularen Polyhydroxylverbindungen b) erfolgt als Eintopfverfahren ohne vorherige NCO-Prepolymerbildung in einfacher und wirtschaftlicher Weise. Die in den erfindungsgemäßen Verfahren eingesetzten Ausgangskomponenten sind preiswerte, in großen Mengen technisch verfügbare Produkte. Herkömmliche Kesselapparaturen genügen ohne besondere apparative Vorkehrungen. Das Verfahren ist jedoch auch vorteilhaft kontinuierlich durchführbar. Darüber hinaus ist das Verfahren umweltfreundlich, da ohne Lösungsmittel gearbeitet werden kann und höchstens geringe Mengen an Kohlendioxid in Freiheit gesetzt werden können. Außerdem fallen nur leicht entsorgbare Kohlensäuresalze bzw. deren wäßrige Lösungen an.

Als Polyisocyanate (Komponente a)) zur Herstellung der Aminogruppen aufweisenden Reaktionskomponenten kommen im Prinzip beliebige aromatische, aliphatische, cycloaliphatische und heterocyclische Polyisocyanate in Frage, wie sie z. B. von W. Siefken in Justus Liebigs Annalen der Chemie, 562, S. 72-136, beschrieben werden, beispielsweise solche der Formel Q (NCO)$_n$, in der n = 2 bis 4, vorzugsweise 2 und Q einen Kohlenwasserstoffrest mit 4 bis 15, einen aromatischen Kohlenwasserstoffrest mit 6 bis 15, vorzugsweise 6 bis 13, C-Atomen, bedeuten. Aromatische Polyisocyanate, z. B. 1,3- und 1,4-Phenylendiisocyanat, 2,4- und 2,6-Toluylendi-isocyanat, sowie beliebige Gemische dieser Isomeren, Diphenylmethan- und Diphenyl-2,4'- und/oder -4,4'- und/oder -2,2'-diisocyanate, einschließlich der Mono- bis Tetra-$C_1$-$C_8$-alkyl- und/oder Chlor-substituierten Derivate und Naphthylen-1,5-diisocyanat sind bevorzugt. Geeignete Diisocyanate sind auch die in DE-A 2 922 966 beschriebenen 2,4'-Diisocyanatodiphenylsulfide und die in z. B. EP-A 24 665 und DE-A 2 935 318 beschriebenen alkylsubstituierten Diphenylmethandiisocyanate.

> Auch aliphatische und/oder cycloaliphatische Polyisocyanate wie 1,6-Hexandiisocyanat, Lysinmethylesterdiisocyanat, Isophorondiisocyanat, die Dicyclohexylmethandiisocyanate oder biurethaltige

4

oder isocyanurathaltige, etwa trifunktionelle Polyisocyanate auf Basis Hexan-1,6-diisocyanat oder Isophorondiisocyanat können zur Anwendung kommen.

Weitere geeignete Isocyanatkomponenten sind polymermodifizierte Polyisocyanate (nach EP-A 37 112 und DE-A 3 223 396).

Weniger geeignet sind Polyisocyanate mit 3 oder mehr NCO-Gruppen im Molekül, wie z. B. Triphenylmethan-4,4',4''-triisocyanat oder Polyphenyl-polymethylenpolyisocyanate (Drei- und Mehrkerndiisocyanate).

Besonders bevorzugt sind jedoch 2,4- und/oder 2,6-Toluy-lendiisocyanate, 4,4'- und/oder 2,4'-Diisocyanatodiphenylmethan, sowie seine $C_1$-$C_4$-Mono- bis Tetraalkyl-Derivate. Unter den aliphatischen Diisocyanaten, welche insgesamt weniger bevorzugt sind, sind Hexamethylendiisocyanat, Isophorondiisocyanat und die isomeren Dicyclo-hexylmethan-4,4'-diisocyanate bevorzugt.

Erfindungsgemäß nicht eingesetzt werden vorgebildete NCO-Prepolymere oder sogenannte Semiprepolymere auf Basis höhermolekularer Polyhydroxylverbindungen (b)).

Als Komponente b) werden Verbindungen mit gegenüber NCO reaktive H-Atome aufweisenden Gruppen ("H-aktive Gruppen") tragende Verbindungen mit mindestens 2 H-aktiven Gruppen wie primäre und/oder sekundäre Hydroxylgruppen und/oder primäre und/oder sekundäre Aminogruppen und/oder Thiolgruppen, bevorzugt mit 2 oder mehr primären Hydroxylgruppen, verwendet. In Frage kommen beispielsweise die in der Polyurethanchemie üblichen, "H-aktive" Gruppen tragenden Polyacetale, Polythioether, Polycarbonate, Polyamide, Polysiloxane, Polylactone und/oder Polybutadiene, besonders aber Polyether. Als H-aktive Gruppen sind Hydroxylgruppen bevorzugt. Derartige, höhermolekulare Polyhydroxyverbindungen werden z. B. durch Polymerisation von Tetrahydrofuran oder von Epoxiden wie Ethylenoxid, Propylenoxid, Butylenoxid, Isobutylenoxid, Styroloxid und/oder Epichlorhydrin mit sich selbst, z. B. in Gegenwart von Lewis-Katalysatoren, wie Bortrifluorid, oder durch Anlagerung dieser Epoxide, vorzugsweise von Ethylenoxid und/oder Propylenoxid, gegebenenfalls im Gemisch oder in sequentieller Additionsfolge, an Startkomponenten mit reaktionsfähigen Wasserstoffatomen wie Wasser, Alkohole, Ammoniak oder Amine, z. B. Ethylenglykol, Propan-diol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether sowie auf Formit oder Formose gestartete Polyether kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufwiesen.

Auch OH-, NH- und/oder SH-Gruppen aufweisende Polybutadiene sind erfindungsgemäß geeignet (s. Progress Org. Coatings, Band 7 (3), 289-329 (1979)).

Als Polyacetale kommen z. B. die aus Glykolen, wie Di- oder Triethylenglykol, 4,4'-Dihydroxyethoxydiphenylmethan, Hexandiol und Formaldehyd oder durch Polymerisation cyclischer Acetale, wie z. B. Trioxan, herstellbaren Verbindungen in Frage.

Als Hydroxylgruppen aufweisende Polycarbonate kommen solche der an sich bekannten Art in Betracht, die z. B. durch Umsetzung von Diolen wie Propandiol-1,3, Butandiol-1,4 und/oder Hexandiol-1,6, Di-, Tri- oder Tetraethylenglykol oder Thiodiglykol mit Diarylcarbonaten, z. B. Diphenylcarbonat, oder Phosgen hergestellt werden können.

Unter den Polythioethern seien insbesonderen die Kondensationsprodukte von Thiodiglykol mit sich selbst und/oder mit anderen Glykolen angeführt.

Auch bereits Urethan- oder Harnstoffgruppen enthaltende Polyhydroxylverbindungen sowie gegebenenfalls modifizierte natürliche Polyole sind verwendbar. Auch Anlagerungsprodukte von Alkylenoxiden an Phenol-Formaldehyd-Harze oder auch an Harnstoff-Formaldehyd-Harze sind erfindungsgemäß einsetzbar. Es ist auch möglich, in die Polyhydroxylverbindungen Amidgruppen einzuführen.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den obengenannten, Hydroxylgruppen aufweisenden, Verbindungen ablaufen läßt. Es ist aber auch möglich, fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyethern oder Polycarbonatpolyolen erhalten werden, sind für das erfindungsgemäße Verfahren geeignet.

Vertreter der genannten erfindungsgemäß zu verwendenden Verbindungen sind z. B. in High Polymers, Vol. XVI, "Polyurethanes Chemistry and Technology", verfaßt von Saunders-Frisch Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400 bis 12 000, z. B. Mischungen von verschiedenen Polyethern, eingesetzt werden.

Als Komponente c) kommen, gegebenenfalls nur anteilweise, auch Verbindungen mit mindestens zwei gegenüber Isocyanaten reaktionsfähigen Wasserstoffatomen ("H-aktive Gruppen") und einem Molekulargewicht von 62 bis 399, vorzugsweise 62 bis 250, in Betracht. Auch in diesem Fall versteht man hierunter Hydroxylgruppen und/oder Aminogruppen und/oder Thiolgruppen, vorzugsweise Hydroxylgruppen aufweisende Verbindungen, wie sie als Kettenverlängerungsmittel oder Vernetzungsmittel aus der Polyurethanchemie an sich bekannt sind. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 62 bis 399, vorzugsweise 62 bis 250, verwendet werden.

Als Beispiele für derartige Verbindungen seien genannt: Diole oder Polyole, z. B. Ethylenglykol, Propandiol-(1,2) und -(1,3), Butandiol-(1,4), -(1,3) und -(2,3), Pentan-diol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol, Glyzerin, Trimethylolpropan, Hexantriol-(1,2,6), Trimethylolethan, Pentaerythrit, Chinit, Mannit und Sorbit, Dianhydrosorbit und Dianhydromannit, Ricinusöl, Di-, Tri- und Tetraethylenglykol, Di-, Tri- und Tetrapropylenglykol, Dibutylenglykol und höhere Polyoxyethylen-, Polyoxypropylen- oder Polyoxybutylenglykole mit einem Molekulargewicht bis 399, 4,4'-Dihydroxy-diphenylpropan, Di-hydroxyethylhydrochinon, Ethanolamin, Diethanolamin, N-Methyldiethanolamin, Triethanolamin und 3-Aminopropanol.

Als niedermolekulare Polyole kommen auch die Gemische von Hydroxyaldehyden und Hydroxyketonen ("Formose") bzw. die hieraus durch Reduktion erhaltenen mehrwertigen Alkohole ("Formit") in Frage, wie sie bei der Selbstkondensation von Formaldehydhydrat entstehen.

Als Hydroxylgruppen aufweisende, höhermolekulare Verbindungen sind die Polyetherpolyole bevorzugt, ebenso die Mitverwendung von Di- oder Polyolen des Molekulargewichtsbereichs 62 bis 399.

Die Mitverwendung von niedermolekularen Verbindungen wie aliphatischen Diaminen oder aromatischen Diaminen ist weniger bevorzugt. Als Beispiele für aromatische Diamine seien beispielsweise 3,3'-Dichlor-4,4'-diaminodiphenylmethan, die Toluylendiamine, 4,4'-Diaminodiphenyl-methan, 4,4'-Diaminodiphenyldisulfide, Diaminodiphenyldithioether, durch Alkylthiogruppen substituierte aromatische Diamine, Sulfonat- oder Carboxylatgruppen enthaltende aromatische Diamine sowie für aliphatisch-aromatische Diamine die Aminoalkylthioaniline genannt.

Als organische Lösungsmittel e), die mindestens zum Teil wassermischbar sind, werden z. B. folgende Lösungsmittelklassen eingesetzt:

1. wasserlösliche, aliphatische oder cycloaliphatische Säureamide mit 1 bis 10 Kohlenstoffatomen, z. B. Dimethylformamid, Diethylformamid, N-Methylpyrrolidon, Dimethylacetamid, Caprolactam, Formamid. Bevorzugt sind Dimethylformamid, Dimethylacetamid und N-Methylpyrrolidon,

2. wasserlösliche Ether des Ethylenglykols wie Ethylenglykoldimethylether oder Ethylenglykoldiethylether, des Diethylenglykols wie Diethylenglykoldimethylether oder Diethylenglykolmonomethylmonobutylether, des Triethylenglykols wie Triethylenglykoldimethylether oder des Propylenglykols, ferner die cyclischen Ether wie Tetrahydrofuran, alkylsubstituierte Tetrahydrofurane wie 2,5-Dimethyltetrahydrofuran oder Dioxane wie 1,4-Dioxan,

3. wasserlösliche, tetraalkylierte aliphatische Harnstoffe oder gegebenenfalls auch Thioharnstoffe mit 4 bis 12 C-Atomen, z. B. Tetramethylharnstoffe oder Tetraethylharnstoff,

4. wasserlösliche, aliphatische oder cycloaliphatische Sulfone oder Sulfoxide mit 2 bis 10 Kohlenstoffatomen, z. B. Tetramethylensulfon oder Dimethylsulfoxid,

5. wasserlösliche, aliphatische oder cycloaliphatische Phosphorsäureamide, z. B. Hexamethylphosphorsäuretriamid,

6. Acetonitril, teilweise wasserlösliches Propionitril,

7. wasserlösliche Ketone wie Aceton und teilweise wasserlösliche Ketone wie Methylethylketon.

Die Lösungsmittel können auch in beliebigen Mischungsverhältnissen zueinander eingesetzt werden. Unter den genannten Lösungsmitteln werden solche bevorzugt, welche bei Normaldruck zwischen 56 und 250°C, vorzugsweise 64 bis 165°C, sieden, da sich hierbei die Aufarbeitung vereinfacht.

Bevorzugte wassermischbare Lösungsmittel sind Dimethylformamid, Dimethylacetamid, Acetonitril, Aceton, Methylethylketon und 1,4-Dioxan.

Weniger bevorzugt ist die Mitverwendung von gegenüber Isocyanaten reaktive Gruppen aufweisenden Lösungsmitteln. Es sind dies u.a. Alkohole wie i-Propanol, t-Butanol oder Ethylgykol.

Gleichfalls weniger bevorzugt sind als Co-Lösungsmittel zusätzlich zu den zumeist wasserlöslichen Lösungsmitteln die im wesentlichen wasserunlöslichen Solventien wie chlorierte und/oder fluorierte aliphatische Kohlenwasserstoffe wie Di-, Tri- und Tetrachlormethan, Trichlorfluormethan, Trichlorethan, aliphatische oder aromatische Kohlenwasserstoffe wie Hexan, Heptan oder Kohlenwasserstoffgemische der Petrolether- oder Benzinreihe, Benzol, Toluol, Xylole und höheralkylierte aromatische Verbindungen, halogenierte oder nitrierte aromatische Verbindungen wie z. B. Chlorbenzol oder Nitrobenzol.

Das Lösungsmittel als Komponente e) soll zu 60 bis 100 % aus Lösungsmitteln bestehen, die zumindest teilweise, bevorzugt gänzlich, wassermischbar sind und cyclische oder acyclische Amid-, Ether-, Harnstoff-, Sulfoxid-, Sulfon-, Phosphorsäureamid-, Nitril- und Ketogruppen aufweisen. Komponente e) kann dann bis zu 40 % aus Lösungsmitteln bestehen, wie sie als weniger geeignet beschrieben wurden.

Insgesamt werden, bezogen auf 100 Teile a)+b)+c)+d)+f) 0 bis 200 Teile, bevorzugt 0 bis 100 Teile, besonders bevorzugt 0 bis 25 Teile, Lösungsmittel oder Lösungsmittelgemisch e) mitverwendet. Dabei ist es für das Verfahren erfindungsunwesentlich, ob das Reaktionsgemisch homogen einphasig oder z. B. eine Dispersion oder eine Emulsion darstellt oder ob etwa Komponente a) in der Komponente e) löslich ist oder nicht. Im allgemeinen ist es für eine vereinfachte Aufarbeitung jedoch günstig, am Ende der Reaktion zwei

# 0 113 020

Phasen zu haben.

Als basischen Katalysatoren (Komponente f)) können die Hydroxide der 1. und 2. Hauptgruppe wie Natrium- oder Kaliumhydroxid, Erdalkalioxide, Carbonate und Hydrogencarbonate von bevorzugt Metallen der 1. Hauptgruppe wie Natrium- und Kaliumhydrogencarbonat bzw. Soda und Pottasche, ferner Carboxylate von bevorzugt einwertigen Carbonsäuren wie Ameisen-, Essig-, Ethylhexansäure mit Metallen der 1. und 2. Hauptgruppe des Periodensystems, insbesondere der 1. Hauptgruppe wie z. B. Kaliumacetat, -octoat, -ethylhexanoat, ferner Carbonate, Hydrogencarbonate, Carboxylate von anorganischen Ammoniumsalzen $(NH_4^+,$

FIG1/10

FIG2/10

FIG3/10

und Carbonate, Hydrogencarbonate, Carboxylate und Hydroxide von organischem Tetraalkylammonium $(C_1$-$C_{18}$-Alkylgruppen), ferner alle Alkali- und Erdalkalisalzes schwacher Säuren wie Kieselsäure, Blausäure, Cyansäure, Thiocyansäure, Isocyansäure, Isothiocyansäure, Schwefelwasserstoff, die durch Hydrolyse in Wasser stark basisch reagieren, eingesetzt werden.

Zusätzlich zu diesen Katalysatoren, die hier im Text auch kurz als Basen bezeichnet sind, können Katalysatoren mitverwendet werden, die als Metallverbindungen Lewis-Säuren darstellen und die als in der Polyurethanchemie verwendete Urethanisierungskatalysatoren bekannt sind. Dabei handelt es sich vor allem um die an und für sich bekannten Blei-, Zink- und Zinnverbindungen, insbesondere Zinnverbindungen und ganz besonders Zinnverbindungen, die hydrolytische Stabilität aufweisen, wie Zinnkatalysatoren der Art nach EP-A 45 090, DE-A 2 657 413, 2 547 526 und 2 722 658.

Weitere, im erfindungsgemäßen Verfahren einsetzbare, katalytisch wirksame Verbindungen werden in der DE-B 2 759 398, Kolonne 6, Zeile 52 bis Kolonne 7, Zeile 54 und im Kunststoff-Handbuch, Band VII, herausgegeben von Vieweg und Höchtlen, Carl-Hanser-Verlag, München 1966, z. B. auf den Seiten 96-102 beschrieben.

## Allgemeines Verfahren

Die einzelnen Komponenten können in beinahe beliebiger Reihenfolge miteinander vermischt oder Vorabmischungen einzelner Komponenten miteinander vereinigt werden. Vermieden werden sollte jedoch die Vermischung der Isocyanatkomponente mit der Basenkomponente ohne Mitverwendung von Wasser und/oder Polyol, da das monomere Polyisocyanat unter diesen Bedingungen zur raschen Trimerisierung neigt.

Je nach dem, ob
(A) Isocyanat vorgelegt wird, ob
(B) Isocyanat zugegeben wird oder ob
(C) Isocyanat und Polyolkomponente gemeinsam in einen Reaktionsraum zudosiert werden,
kann man drei Grundreaktionsmuster unterscheiden. Jede dieser drei Grundtypen weist nun gewisse Besonderheiten auf, jedoch treten bei allen drei Typen auch gemeinsame Probleme auf. (A) und (B) sind diskontinuierlich, Variante (C) kann kontinuierlich durchgeführt werden. In dieser kontinuierlichen Ausführungsform von (C) liegt einer der Vorteile der vorliegenden Erfindung begründet: Polyol, Isocyanat und andere Komponenten können kontinuierlich eingeführt werden.

Im folgenden werden die drei Grundreaktionsmuster ausführlich diskutiert.

## Verfahrensvariante A:

### Isocyanat-Komponente wird vorgelegt

Das Isocyanat kann ohne Lösungsmittel vorgelegt werden, es kann als Lösung in einem Lösungsmittel vorgelegt werden und es kann zu bereits im Reaktionsraum befindlichem Lösungsmittel, das praktisch kein Wasser enthält, zugegeben werden. Dabei kann alles oder nur ein Teil der im erfindungsgemäßen Verfahren verwendeten Lösungsmittelmenge vor der Zugabe der NCO-Verbindung eingeführt worden sein, der gegebenenfalls vorhandene Restteil des Lösungsmittels kann zur Lösung der NCO-Verbindung und Hinzufügung in den Reaktionsraum mit dieser verwendet werden; sie kann getrennt mit der NCO-Verbindung, aber im wesentlichen gleichzeitig mit dieser, oder zu einem beliebigen Zeitpunkt, gegebenenfalls in Kombination mit einer oder mehreren Komponenten, zugegeben werden.

Sind Komponente a) und gegebenenfalls Komponente b), wobei Komponente e) gegebenenfalls nur anteilig mit vorgelegt wird, im Reaktionsgefäß befindlich, so wird mit Vorzug als nächste Komponente die H-aktive Gruppen aufweisende Verbindungen b) und/oder c) bzw. ein Gemisch solcher Verbindungen, zugegeben. Komponenten b) oder b)+c) können alleine oder in Kombination mit gegebenenfalls Teilen von Komponente e)

7

verwendet werden, mit Komponente c) können auch sogenannte Urethanisierungskatalysatoren der an sich bekannten Art mitverwendet werden. Die Hinzufügung von basischen Katalysatoren wie Alkalihydroxiden oder tert.-Aminen zu diesem Zeitpunkt und gleichzeitig mit Komponente b) ist nicht bevorzugt, um keine unkontrollierten Reaktionen hervorzurufen.

Nach der Zugabe von e) oder auch gegen Ende, z. B. ab dem Zeitpunkt, bei dem etwa die Hälfte von e) zugegeben worden war, können Base f) und Wasser d) zugegeben werden. Bevorzugt wird dies in Form einer wäßrigen Lösung oder Dispersion im Wasser geschehen und bevorzugt wird mit dieser wäßrigen Lösung oder Dispersion sämtlich benötigte Base und sämtliches Wasser zugegeben, doch können Wasser und Base auch getrennt zudosiert werden, gegebenenfalls jeweils im Gemisch mit, gegebenenfalls anteiligen, Mengen Lösungsmittel. Dabei ist es ohne Belang, ob zuerst Wasser oder basischer Katalysator zugegeben wird. Allerdings sollte, wenn zuerst Wasser zugegeben wird, mit der Basenzugabe zur Vermeidung von Harnstoffbildung (falls solche speziellerweise nicht gewünscht wird) nicht zu lange gewartet werden. Aus praktischen Gründen sehr bevorzugt ist jedoch immer die Zugabe von e) und Wasser als wäßrige Lösung oder Dispersion/Emulsion bzw. bei nicht genügender gegenseitiger Mischbarkeit auch getrennt, jedoch gleichzeitig.

Die Vermischung, wie sie eben beschrieben wurde, wird bei Reaktionstemperaturen von -20 bis 175° C durchgeführt. Wird ohne Anwendung von äußerem Druck gearbeitet, was bevorzugt ist, so beträgt der verwendete Temperaturbereich -20 bis 100° C, bzw. bei der Mitverwendung eines unter der Temperatur des Siedepunkts von Wasser siedenden Solvensgemisches maximal dessen Siedepunkt. Bevorzugter Temperaturbereich ist 0-80° C, besonders bevorzugt 20-60° C, ganz besonders bevorzugt wird bei Raumtemperatur gearbeitet und von außen weder gekühlt noch erwärmt. Die auftretenden Reaktionswärmen sind gering und leicht kontrollierbar, sofern nicht Base und Isocyanat-Monomeres unmittelbar vereinigt werden.

Dabei können Komponente a) und Komponente e), bzw. deren anteilige Menge, praktisch augenblicklich miteinander vermischt werden, z. B. innerhalb von etwa 1 bis 30 Sekunden. Die Zugabe von Komponente c) kann praktisch augenblicklich erfolgen, z. B. in 1 Sekunde bis 2 Minuten, aber auch über einen Zeitraum von z. B. 10 Minuten bis 30 Minuten sich erstrecken. Die Zugabe von Wasser oder der wäßrigen Basenlösung oder der Base und nachfolgenden von Wasser zur aus zumindest Isocyanatkomponente und Komponente b) sowie gegebenenfalls Solvens bestehender Reaktionsmischung kann zu verschiedenen Zeitpunkten erfolgen. Wird z. B. Wasser vor der Base zugefügt, so kann Wasser schon mit Komponente c) mitgegeben werden, sonst z. B. nach beendeter Zugabe von b). Wird eine wäßrige Basenlösung, -dispersion etc. verwendet oder anderweitig Wasser und Base gleichzeitig in das Reaktionsgefäß appliziert, so kann dies zu einem Zeitpunkt erfolgen, bei dem etwa die Hälfte der Komponente b) zugegeben ist, sie kann jedoch auch nach vollständiger Zugabe, z. B. bis 6 Stunden nach beendeter Zugabe von Komponente b), erfolgen.

**Verfahrensvariante B:**

Verfahrensvariante B besteht im Prinzip darin, daß zu vorgelegter Komponente b) und gegebenenfalls c) die im Gemisch mit zumindest Teilen an Komponenten d) und e) sowie f) vorgelegt wird, Komponente a) zugegeben wird. Werden Komponenten a) und b) ohne Mitvermischung von d), c) und f) vermischt, so wird dies als bloße Variation des unter A geschilderten Verfahrens angesehen.

Komponente b) enthält also teilweise oder bevorzugt vollständig die Komponenten d), e) sowie insbesondere f) in gelöstem oder dispergiertem Zustand. Bevorzugt stellt diese Reaktionsmischung eine klare, einphasige Lösung dar. Dazu wird Komponente a) zugegeben, die gegebenenfalls in Teilen oder in der gesamten Menge der gegebenenfalls mitverwendeten Lösungsmittelmenge gelöst wird. Nach der Zugabe der Isocyanatkomponente kann gegebenenfalls weiteres Lösungsmittel (z. B. zur Rührerleichterung, zur Bewerkstelligung von Phasentrennung), restliche Mengen Wasser sowie insbesondere restliche Mengen an Base bzw. andere Basen zugegeben werden. Dabei beträgt die in Mischung mit Komponente b) vor Zugabe von Komponente a) sich befindliche Basenmenge 10-100 % der gesamten verwendeten Basenmenge. Gegebenenfalls restliche, nicht mit b) vorgelegte Mengen an d), e) und f) können jedoch nicht nur nach Zugabe von a), sondern auch währenddessen zugegeben werden.

Die allgemeinen Temperaturgrenzen liegen wie bei Verfahrensvariante A, bevorzugt wird bei 20-60° C gearbeitet. Die Isocyanatzugabe kann z. B. in 1 Sekunde bis 10 Stunden erfolgen, bevorzugt in 10 Minuten bis 60 Minuten.

In einer besonderen Ausführungsform dieser Variante werden
1) aus den Komponenten a) und gegebenenfalls Solvens (gegebenenfalls anteilsweise) sowie
2) aus den restlichen Reaktionspartnern
zwei Reaktionskomponenten hergestellt und diese auf einer kontinuierlich arbeitenden Vermischungsmaschine verarbeitet.

**Verfahrensvariante C:**

Vorgelegt wird hier ein Gemisch aus Base, Wasser sowie gegebenenfalls Solvens, wobei es auch möglich ist, nur einen Teil der eingesetzten Gesamtmenge an Base und/oder Wasser vorzulegen und den Rest, gleichzeitig mit Komponenten b), c) und e) und gegebenenfalls als Lösung oder Mischung mit Komponente b)/c) oder auch ganz oder teilweise nach beendeter Zugabe von Komponenten e) und b)/c) zuzufügen.

Die Isocyanatkomponente, die auch bei Verfahrensvariante C einen Teil des oder die vollständige Menge an Solvens enthalten kann und Komponente b)/c), die ebenfalls enthalten sein kann, werden im allgemeinen gleichzeitig in das ein Gemisch aus Base, Solvens, Wasser und gegebenenfalls Solvens enthaltende Reaktionsgefäß eingeführt.

Es ist jedoch auch möglich, Komponente b)/c) mit Vor- und/oder Nachlauf und Komponente a) mit einem gewissen Nachlauf zuzugeben.

Dabei sind im Prinzip noch eine ganze Reihe von Variationen bezüglich der zeitlichen Abfolge der Zugaben der einzelnen Reaktionskomponenten möglich, die im einzelnen zu diskutieren unmöglich ist. Im allgemeinen wird so vorgegangen, daß sämtliche Base und alles Wasser vorgelegt und Komponenten a) und b)/c) möglichst schnell zugegeben werden. Das Lösungsmittel, sofern es mitverwendet wird, kann beliebig auf die Reaktionskomponenten verteilt werden.

Die Temperatur verhält sich im gleichen Rahmen wie bei Varianten A und B, besonders bevorzugt wird hier bei 20 bis 40°C gearbeitet und extern mit Eis gekühlt, insbesondere wenn kein Lösungsmittel mitverwendet wird.

Aus dem Geschilderten heraus versteht sich von selbst, daß noch eine ganze Reihe von weiteren Varianten neben A, B und C möglich sind und daß praktisch unbegrenzt beliebige Reihenfolgen der Komponentenvermischungen möglich sind. Lediglich die Vermischung von überschüssigem Isocyanat mit Base oder auch wäßriger Base sollte vermieden werden.

**Aufarbeitung der nach den Verfahrensvarianten A bis C erhaltenen Reaktionsansätze**

Nur in den seltensten Fällen wird man nun ein fest-kristallines Produkt erhalten, das direkt durch Filtration abgetrennt werden kann. Im allgemeinen hat man ein flüssiges, gegebenenfalls heterogenes Reaktionsgemisch, das nun erhitzt wird. Dieses Erhitzen ist notwendig, nun einerseits die Umwandlung der NCO- und Aminogruppen zu vervollständigen oder andererseits sie erst zu bewirken, etwa indem vorher nur eine mehr oder minder stabile Zwischenstufe entstand, die nun thermisch gespalten werden muß (etwa eine Carbamat-Zwischenstufe) und/oder ferner zur Destillation von flüchtigem Material. Wurde vorher (Vermischung der Komponenten) bereits bei maximaler Temperatur gearbeitet (ohne Druckanwendung beim Siedepunkt von Wasser bzw. bei der Siedetemperatur des Lösungsmittels), so kann diese Temperatur beibehalten werden. Wurde vorher im Temperaturbereich von z. B. 20 bis 40°C gearbeitet, wird auf bevorzugt 60 bis 100°C erwärmt. Diese thermische Behandlung der Reaktionsansätze, die eine Erwärmung auf 20 bis 175°C, bzw. ohne Anwendung von äußerlichem Druck, auf bevorzugt 60 bis 100°C beinhaltet, kann mit einer weiteren chemischen Behandlungsmaßnahme, vorzugsweise einer, die die Umwandlung der NCO- in Aminogruppen bewerkstelligt oder beschleunigt, kombiniert werden. Eine solche Maßnahme ist z. B.

1) die Zufügung einer sauren Verbindung, die im allgemeinen eine stark saure Mineralsäure wie Salzsäure oder Schwefelsäure oder auch eine starke organische Säure wie Essig- oder Ameisensäure sein wird. Dabei kann die Säure in einer praktisch beliebigen Menge eingesetzt werden, bevorzugt wird eine der eingesetzten Basenmenge äquivalente Menge an Säuren eingesetzt. Außer solchen Mineral- und starken organischen Säuren können auch saure Ionenaustauscherharze Verwendung finden. Eine weitere solche Maßnahme wäre

2) die Hinzufügung eines Lösungsmittels, das für das herzustellende Amin ganz ausgeprägte Löslichkeit aufweist und durch Zweiphasenbildung das gebildete Amin aus dem Zersetzungsgleichgewicht entfernt und so die Aminbildung beschleunigt.

Bei der Aufarbeitung wie auch bei der Vermischung der Reaktionskomponenten kann Kohlendioxid entweichen. Dabei muß u.U. auf ein Überschäumen des Reaktionsansatzes geachtet werden. Starkes Schäumen kann ebenfalls bei der Einwirkung von Säure auf den Reaktionsansatz erfolgen oder, wenn bei der Verwendung von z. B. Alkalihydroxiden als Basen die entsprechenden Alkalihydrogencarbonate sehr fein ausfallen.

Nach der Vermischung der Komponenten kann sich also eine Aufarbeitungsstufe anschließen, die bei erhöhter Temperatur (20 bis 175°C, bevorzugt 60 bis 100°C) erfolgt und vorzugsweise bei Normaldruck, gegebenenfalls bei schwachem Unterdruck von z. B. 200 bis 700 Torr, weniger bevorzugt bei Überdruck, durchgeführt wird. Nach Beendigung dieser Aufarbeitungsstufe ist die Reaktion und insbesondere die Bildung von Aminogruppen aus NCO-Gruppen über etwaige Zwischenstufen beendet.

**Abtrennung des aminischen Produkts aus der Reaktionsmischung**

Enthält die 20 bis 175°C, bevorzugt 60 bis 100°C, heiße und bevorzugt Normaldruck aufweisende Reaktionsmischung das Produkt als Feststoff, so wird nach gegebenenfalls Abkühlen auf z. B. 20°C das feste aminische Produkt durch z. B. Filtration, gegebenenfalls unter Druck, Zentrifugation etc. abgetrennt und gegebenenfalls nach an sich bekannten Methoden gereinigt.

Enthält die Reaktionsmischung ein festes Produkt, das nicht oder nur zu einem geringfügigen Teil das gewünschte aminische Produkt ist, z. B. festen Katalysator oder ein Salz, so kann heiß oder nach Abkühlen filtriert oder zentrifugiert oder der Feststoff anderweitig abgetennt werden. Da im Falle von festen Nebenprodukten oder anderen festen Reaktionsteilnehmern sowieso abgesaugt werden muß, wird normalerweise dieser feste Stoff nicht abgetrennt. Ist jedoch absolut sicher, daß außer dem angefallenen Feststoff kein weiterer Feststoff mehr anfallen wird, kann mit Vorteil dieser Feststoff sofort abgetennt werden. Die Reaktionsmischung bzw. das Filtrat werden nun im allgemeinen von flüchtigen Bestandteilen befreit. Flüchtige, abzudestillierende Bestandteile der Reaktionsmischung sind zumindest Wasser, ferner gegebenenfalls niedermolekulares Diamin (durch Umwandlung der NCO-Gruppen des Diisocyanats in Aminogruppen), NCO-reaktive Gruppen aufweisende Ausgangskomponente mit niedrigem Siedepunkt, flüchtige Katalysatoren wie z. B. t-Amine und insbesondere Lösungsmittel. Die Destillation erfolgt bei Normaldruck, bevorzugt jedoch bei vermindertem Druck. Bevorzugt wird zuerst bei einem Druck von z. B. 10 bis 700 mbar und dann bei einem Druck von z. B. 0,01 bis 10 mbar destilliert. Destilliert wird hierbei bei einer Sumpftemperatur von 20 bis 175°C, z. B. kann mit zunehmend vermindertem Druck die Sumpftemperatur gesteigert werden, z. B. von 60 bis 110°C.

Nachdem alle flüchtigen Bestandteile oder die gewünschten flüchtigen Bestandteile abdestilliert worden sind, wird nochmals, bevorzugt bei 40 bis 100°C, besonders bevorzugt 80 bis 95°C, filtriert, gegebenenfalls unter Druck von z. B. 1 bis 3 bar, z. B. mit einer beheizbaren Drucknutsche. Bei schlechter Absaugbarkeit eventueller Feststoffe muß u.U. erneut mit Solvens aufgenommen, filtriert und destilliert werden.

Ist das nach der Aufarbeitungsstufe bzw. nach der Vermischung anfallende, ausreagierte Reaktionsgemisch zweiphasig, was vor allem vom Charakter der verwendeten NCO-reaktive Gruppen aufweisenden Verbindungen und vom Solvens, bzw. vom System Wasser/Solvens sowie von einem eventuellen Salzgehalt der Reaktionsmischung abhängt, so können die beiden Phasen voneinander getrennt werden, z. B. in einem Scheidetrichter durch Ablassen der unteren Phase. Die das aminische Produkt enthaltende Phase wird wie oben aufgearbeitet. Die andere Phase wird entsorgt bzw. regeneriert.

**Mengen-Verhältnisse**

Idealerweise sollte von jedem Diisocyanat eine NCO-Gruppe mit einer NCO-reaktiven Gruppe, die nicht Wasser sein sollte, zu einem NCO-Addukt, im allgemeinen einem Urethan, reagieren und die andere NCO-Gruppe in eine Aminogruppe hydrolytisch umgewandelt werden.

Dies ist jedoch nur selten der Fall. Deshalb werden, je nach den gewünschten Produkteigenschaften, verschiedene Verhältnisse von NCO-Gruppen:NCO-reaktive Gruppen gewählt. Auch die Menge und insbesondere die Art des Katalysators nimmt Einfluß auf die Produktqualität.

Sind möglichst wenige verbliebene NCO-reaktive Gruppen aus Komponente b)/c) erwünscht, d.h. soll Komponente b)/c) praktisch vollständig abreagieren, so wird, bezogen auf die Menge an NCO-reaktiven Gruppen, ein mehr als doppelter Überschuß an NCO-Gruppen verwendet, bevorzugt im Verhältnis von NCO-Gruppen zu NCO-reaktive Gruppen von 2,1:1 bis 10:1, besonders bevorzugt 2,5:1 bis 5:1.

Ist jedoch erwünscht, daß praktisch kein freies, monomeres, niedermolekulares Diamin im Produkt mehr vorhanden ist, so muß ein Verhältnis an NCO-reaktive Gruppen aus der Komponente b)/c) gegenüber den NCO-Gruppen aus Komponente a) von 1:0,1 bis 1:1, besonders bevorzugt 1:0,2 bis 1:0,8, verwendet werden. Zusätzlich oder auch ausschließlich kann der Aminmonomerengehalt im Produkt durch weitere Maßnahmen wie z. B. Abdestillation gesenkt werden, insbesondere natürlich bei einem Verhältnis von NCO-Gruppen aus Komponente a) zu H-aktive Gruppen aus Komponente b)/c) von > 1, ganz besonders bevorzugt bei > 2.

Selbstverständlich ist auch ein Verhältnis von NCO-Gruppen zu NCO-reaktive Gruppen von 1:1 bis 2,1:1 möglich und im Rahmen dieser Erfindung auch bevorzugt. Man erhält in solchen Fällen ausgesprochen dreikomponentige Produktgemische aus Resten von Komponenten b)/c), ins Amin übergeführten Resten von Komponente a) und dem durch hydrolytische Zersetzung der NCO-Gruppen eines aus Komponente a) und Komponente b)/c) entstandenen Zwischenprodukts, entstandenen gewünschten Produkt.

Selbstverständlich kann im Prinzip jedes gewünschte Verhältnis von NCO-Gruppen zu NCO-reaktive Gruppen eingehalten werden. Ein zu einseitiges Übergewicht einer dieser beiden Sorten von reaktiven Gruppen bringt jedoch keine Vorteile und insbesondere ein starker Überschuß, z. B. ein 20- bis 50-facher Überschuß, ist sinnlos.

Wasser wird zur Umwandlung der NCO-Gruppen in $CO_2$ (bzw. $CO_2$/Basen-Salze) und Aminogruppen essentiell benötigt. Die minimale Menge an benötigtem Wasser richtet sich nach dem Verhältnis von NCO-Gruppen zu NCO-reaktive Gruppen, das Auskunft gibt über die Menge an formelmäßig zur Hydrolyse anstehenden und verbleibenden NCO-Gruppen.

Die genaue Kenntnis dieser Zahl ist jedoch unwichtig, da Wasser ohnehin in einem großen Überschuß eingesetzt wird. So entfallen auf jedes Äquivalent an NCO-Gruppen > 10, bevorzugt > 50, besonders bevorzugt > 100 Äquivalente Wasser.

Die als Komponente bei der Vermischung der Komponenten in Schritt A verwendete Lösungsmittelmenge (ohne die gegebenenfalls erfolgten Aufarbeitungsschritte etwa zur Viskositätserniedrigung oder zur Herbeiführung von Zweiphasigkeit eingesetzten Solvens-Mengen) beträgt auf 100 Teile Komponente a) im allgemeinen 1 bis 5000 Teile, bevorzugt 10 bis 2500, besonders bevorzugt 50 bis 1000 Teile.

Von besonderem Interesse ist die Menge f) der verwendeten Basen bzw. Menge der Katalysatoren. Menge und Art der Basen bzw. der Katalysatoren richten sich dabei nach Menge, Art (insbesondere Hydrophilie/phobie, Reaktivität), von Komponenten a) und b)/c), die Menge an Base oder Katalysator richtet sich jedoch auch nach der Art der Base oder des Katalysators. Dabei werden bevorzugt, wenn in heterogenwäßriger oder ausschließlich wäßriger Umgebung gearbeitet wird, die eine intermediäre Carbonatstufe bildenden Alkali- und Erdalkalihydroxide, dagegen in homogener Phase unter Verwendung von Lösungsmitteln Katalysatoren vom t-Amintyp oder Hydrogen/Carbonate oder Carboxylate, verwendet.

Im ersten Fall werden bevorzugt pro Äquivalent NCO-Gruppe 1 bis 10 Äquivalente, bevorzugt 1 bis 6 Äquivalente, Hydroxidgruppen zugesetzt. Natürlich können auch mehr oder weniger Hydroxidionen (z. B. 0,1 bis 0,99 Äquivalente auf 1 Äquivalent NCO-Gruppen) zugesetzt werden. Im ersten Fall bringt es keine Produktverbesserung und auch sonst keine Vorteile, im zweiten Fall werden immer geringere Konversionsraten der NCO/NH$_2$-Umwandlung, immer mehr niedermolekulare Harnstoffbildung und damit im allgemeinen schlechtere Produktqualität erhalten.

Die Mengen an anderen basischen, nicht-flüchtigen, organischen oder anorganischen Katalysatoren wie Carbonaten, Hydrogencarbonaten, Pseudohalogensalzen, die vorzugsweise bei Mitverwendung von Lösungsmitteln Einsatz finden, betragen im allgemeinen 0,01 bis 10 Gew.-%, bezogen auf 100 Gew.-% Komponente a), jedoch kann auch wesentlich mehr katalytisch aktive Substanz mitverwendet werden.

Noch größere Anteile können mitverwendet werden, wenn flüchtige, flüssige organische Basen vom t-Amin-Typ verwendet werden. Sie können sogar als Lösungsmittel verwendet werden. So fallen auf 100 Gew.-% Komponente a) 0,01 bis 1000 Gew.-%, bevorzugt 1 bis 100 Gew.-%, besonders bevorzugt 2 bis 10 Gew.-%, Base vom t-Amin-Typ an. Diese Basen werden insbesondere dann mit Vorzug verwendet, wenn im wesentlichen nicht wäßrig-homogen gearbeitet werden soll.

Die Urethanisierungskatalysatoren, die gegebenenfalls mitverwendet werden können, werden, bezogen auf Komponente c), zu 0,001 bis 10 Gew.-%, bevorzugt 0,01 bis 5 Gew.-%, besonders bevorzugt 0,02 bis 2 Gew.-%, eingesetzt. Bevorzugt sind Katalysatoren auf der Basis von Zinn-, Blei- oder Wismutverbindungen.

Die Reaktionsansätze können ferner noch weitere Hilfsmittel wie Entschäumer oder Emulgiermittel in Mengen von 0,001 bis 5 Gew.-% enthalten.

Die nach der Aufarbeitung erfindungsgemäß erhaltenen Polyamine bzw. aminhaltigen Reaktionsgemische stellen im allgemeinen farblose bis schwach gefärbte, viskose bis hochviskose und gegebenenfalls höherschmelzende Produkte mit den bereits angegebenen Aminogruppengehalten dar. Diese Polyaminprodukte weisen entsprechend ihren Ausgangsstoffen gegebenenfalls Ether- und/oder Acetal- und/oder Carbonat- und/oder Ester- und/oder Thioether und/oder Dialkylsiloxangruppen und/oder die Reste von Polybutadienen auf, wie sie bereits in den "H-aktiven Gruppen" aufweisenden Verbindungen b)/c) vorgelegen haben.

Sie weisen ferner Gruppen auf, wie sie durch Reaktion von Isocyanatkomponenten mit den gegenüber NCO reaktiven Gruppen ("H-aktiven Gruppen") aus Komponenten b)/c) zustande kommen, insbesondere Urethan- und/oder Harnstoffgruppen und aus diesen durch Folgereaktionen sich ergebenden Allophanat- und/oder Biuretgruppen.

Durch Nebenreaktionen können jedoch auch zusätzliche Bindungen entstehen, z. B. Harnstoffgruppen aus bereits verseiften Anteilen und noch verbliebenen NCO-Gruppen während der Hydrolysereaktion. Die Menge der in den Polyaminen enthaltenen primären aromatischen Aminogruppen entsprechen maximal der Menge der NCO-Gruppen in den NCO-Verbindungen, vermindert um den Anteil, der mit Komponente a) oder in Neben- oder Folgereaktionen reagiert hat. Der Amingehalt entspricht ungefähr den Gehalten, die Amine haben, die nach DE-OS 3 039 600 entstehen, das sind ca. 0,1 bis 25 Gew.-%, bevorzugt ca. 0,2 bis 10 Gew.-%, besonders bevorzugt 0,5 bis 5 Gew.-% NH$_2$-Gruppen.

An aliphatische Reste gebundene NCO-Gruppen liefern hochreaktive aliphatische Amine als Hydrolysenprodukte, welche mit noch vorhandenen NCO-Gruppen sehr schnell zu Harnstoffverbindungen abreagieren können und somit zumeist relativ höhermolekulare Polyharnstoffamine mit einem in vielen Fällen niedrigen NH$_2$-Gehalt ergeben.

Die erfindungsgemäß erhaltenen, bevorzugt aromatischen Aminogruppen aufweisenden Produkte werden wegen ihres niedrigen Dampfdruckes vorzugsweise als Reaktionspartner für gegebenenfalls blockierte Polyisocyanate bei der Herstellung von Polyurethanen (Polyurethanharnstoffen), gegebenenfalls zelligen Polyurethankunststoffen oder Polyurethanschaumstoffen eingesetzt, wobei sie gegebenenfalls auch mit anderen niedermolekularen (Molekulargewicht 32 bis 399) und/oder höhermolekularen (Molekulargewicht 400 bis ca. 12 000) Verbindungen mit gegenüber Isocyanaten reaktiven Gruppen kombiniert werden können. Geeignete Ausgangskomponenten für die Herstellung von Polyurethankunststoffen werden oben im Zusammenhang mit der Prepolymerherstellung bzw. auch in DE-A 2 302 564, DE-A 2 432 764 (US-PS 3 903 679) sowie in den DE-A 2 639 083, 2 512 385, 2 513 815, 2 550 796, 2 550 797, 2 550 833, 2 550 860 und 2 550 862 genannt.

Dort finden sich auch Hinweise auf bei der Polyurethanherstellung gegebenenfalls mitzuverwendende Hilfs- und Zusatzstoffe.

Die Herstellung von Polyurethan(harnstoff)en mittels der erfindungsgemäß hergestellten Polyamine ist ebenfalls Gegenstand der vorliegenden Erfindung. Ihre Anwendung kann z. B. für Elastomere, Beschichtungen, Fäden in der Applikation aus Schmelzen, Lösungen, Dispersionen oder als Reaktivkomponentenmischung erfolgen.

Weitere Verwendungszwecke der erfindungsgemäß hergestellten Polyamine sind z. B. Kupplungskomponenten für Diazofarbstoffe, Härter für Epoxid- und Phenolharze, sowie alle anderen an sich bekannten Reaktionen von Aminen wie Amid- oder Imidbildung und andere.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

## Beispiele

### Beispiel 1

Vorgelegt wird eine Mischung aus 2 kg eines Polyetherdiols aus 80 Gew.-% Propylenoxid-Einheiten und 20 Gew.-% endständig angeordneter Ethylenoxid-Einheiten der OH-Zahl 56, 3 g Dibutylzinn-IV-bis-p-tosylat (als hydrolysestabiler Urethanisierungs-Katalysator) in Form einer Lösung in 10 ml Dimethylformamid, 160 g (4 mol OH) Natriumhydroxid, 1 g Mersolat H® (Emulgator) und 500 g Wasser. Innerhalb von 70 Minuten werden unter intensiver Kühlung mit einem Eisbad und unter weiterem Rühren 348 g (2 mol) 2,4-Diisocyanatotoluol zugegeben. Die Temperatur im Reaktionsgefäß wird auf 22 bis 30°C gehalten. 10 Minuten wird bei 30°C nachgerührt, anschließend ist das Reaktionsgemisch NCO-frei. Das Reaktionsgefäß wurde 2 Stunden auf 80°C erhitzt, wobei beim Erreichen von etwa 60°C kräftige Gasentwicklung zu beobachten war. Das Wasser und die kleine Menge DMF wurden bei 100°C/20 mbar und dann 100°C/1 mbar abdestilliert und das ausgefallene Salz abfiltriert. Analyseergebnisse dieses und der folgenden Beispiele siehe Tabelle.

### Beispiel 2

Es wird ein gleicher Ansatz wie in Beispiel 1 genau wie in Beispiel 1 durchgeführt und aufgearbeitet, jedoch wird kein Katalysator und kein DMF mitverwendet.

### Beispiel 3

Vorgelegt wird eine Mischung aus 2 kg des Polyetherdiols aus Beispiel 1, 1 kg Dimethylformamid, 500 g Wasser, 160 g Natriumhydroxid und 1 g Mersolat H®. Innerhalb 40 Minuten werden unter kräftigem Rühren und intensiver Kühlung mit einem Eisbad 348 g 2,4-Diisocyanatotoluol zugegeben. Dabei wird die Temperatur im Reaktionsgefäß bei 25 bis 27°C gehalten, bei dieser Temperatur wird auch 15 Minuten nachgerührt. Anschließend werden Dimethylformamid und Wasser, erst bei 20 mbar, dann 0,1 mbar, Druck und 100°C Badtemperatur abdestilliert und vom Rückstand das ausgefallene Salz abfiltriert.

### Beispiel 4

Vorgelegt wird eine Mischung aus 2 kg des Polyetherdiols aus Beispiel 1 (2 mol Hydroxylgruppen), 3 g des Zinnkatalysator/DMF-Gemisches aus Beispiel 1, 160 g Natriumhydroxid (4 mol), 500 g Wasser (27,8 mol) und 1 g Mersolat H®. Innerhalb von 45 Minuten werden unter kräftigem Rühren und intensiver Kühlung mit einem Eisbad 348 g (2 mol) 2,4-Diisocyanatotoluol (4 mol NCO-Gruppen) als Lösung in 500 ml Aceton zugegeben. Die Temperatur des Reaktionsgemisches wird auf 22 bis 30°C gehalten, 10 Minuten wird bei dieser Temperatur nachgerührt. Die Reaktionsmischung wird für 2 Stunden auf 60°C erwärmt, wobei bei Erreichen der Marke kräftige und plötzliche Gasentwicklung zu beobachten ist. Es wird abgesaugt, Aceton und Wasser bei vermindertem Druck abdestilliert und erneut abgesaugt.

**Beispiel 5**

Beispiel 5 wurde in Ansatz, Durchführung und Aufarbeitung wie Beispiel 4 durchgeführt, jedoch wurden die 500 ml Aceton nicht der NCO-Komponente, sondern der "$H_2O$-Komponente" einverleibt. Die bei 60°C eintretende Gasentwicklung war noch lebhafter.

**Beispiel 6**

Vorgelegt wird eine Mischung aus 1 kg des Polyetherdiols aus Beispiel 1, 1,5 g des Katalysators aus Beispiel 1 in 20 ml DMF, 200 g Wasser (11,1 mol), 200 g Methylethylketon, 0,2 g Mersolat H® und 106,8 g Natriumhydroxid (2,67 mol). Innerhalb 45 Minuten werden unter kräftigem Rühren und intensiver Kühlung mit einem Eisbad 232 g (1,33 mol) 2,4-Diisocyanatotoluol (2,67 mol NCO) zugegeben. Dabei wird die Temperatur des Reaktionsgemisches zwischen 20 und 30°C gehalten. Ohne nachzurühren wird dann 3 Stunden auf 80°C erhitzt, wobei es zu keiner stoßartigen Gasentwicklung kommt. Abdestillation des Solvens und von Wasser und die Salzabtrennung erfolgen wie in Beispiel 1.

**Beispiel 7**

Vorgelegt wird eine Mischung aus 2 kg des Polyetherdiols aus Beispiel 1 (2 mol Hydroxylgruppen), 2 g des Katalysators aus Beispiel 1, gelöst in 20 ml DMF, 400 g Wasser (22,2 mol), 400 g 2,5-Dimethyltetrahydrofuran, 106,8 g Natriumhydroxid (2,67 mol) und 0,4 g Mersolat H®. Innerhalb 30 Minuten werden unter intensiver Kühlung und heftigem Rühren 232 g (1,33 mol) 2,4-Diisocyanatotoluol (2,67 mol NCO-Gruppen) bei einer Innentemperatur von 20 bis 30°C zugegeben. Ohne Nachrühren wird 150 Minuten auf 60°C erhitzt, dann von ausgefallenen Salzen befreit, Lösungsmittel und Wasser abdestilliert und erneut filtriert.

**Beispiel 8**

Vorgelegt werden 348 g (2 mol), 40°C warmes 2,4-Diisocya-natotoluol. Dazu wird innerhalb 5 Minuten eine Mischung aus 2 kg des Polyetherdiols aus Beispiel 1 (2 mol Hydroxylgruppen) und 2 g des Katalysators aus Beispiel 1, gelöst in 40 ml DMF gegeben. Dabei erwärmt sich die Reaktionsmischung exotherm auf 60°C. Nach Beendigung dieser Zugabe wird innerhalb 30 Minuten ohne Kühlung eine Mischung aus 160 g (4 mol) Natriumhydroxid, 500 ml Wasser und 200 ml Aceton zugetropft. Nach dem Abkühlen der Reaktionsmischung wird diese mit 2 l Methanol aufgenommen, abgesaugt, das Filtrat wie in Beispiel 1 destilliert und erneut abgesaugt.

**Beispiel 9**

Vorgelegt wird eine Mischung aus 2 kg des Polyetherdiols (2 mol Hydroxylgruppen) aus Beispiel 1, 3 g des Zinnkatalysators aus Beispiel 1, gelöst in 10 ml DMF, 500 g Wasser, 160 g (4 mol) Natriumhydroxid und 1 g Mersolat H®. Bei einer durch Kühlung mit einem Eisbad erreichten Innentemperatur von 22 bis 26°C werden innerhalb 80 Minuten 500 g eines Gemisches aus 50 Gew.-% 2,4'- und 50 Gew.-% 4,4'-Diisocyanatodiphenylmethan (4 mol NCO) unter kräftigem Rühren zugegeben. Nach Zugabe von 2/3 der Isocyanat-Menge werden weitere 500 g Wasser zugegeben. Danach wurde 1 Stunde auf 80°C erhitzt und das Wasser im Wasserstrahlpumpenvakuum abdestilliert. Nach Zugabe von 1 l Methanol wird filtriert, Methanol und restliche, weitere flüchtige Komponenten abdestilliert und erneut filtriert.

**Beispiel 10**

Vorgelegt wird eine Mischung aus 2 kg eines Polypropylenglykols der OH-Zahl 56 (2 mol Hydroxylgruppen), 3 g des Katalysators aus Beispiel 1 als Lösung in 40 ml DMF, 160 g Natriumhydroxid, 400 g Wasser, 400 g Aceton und 0,4 g Mersolat H®. Innerhalb 30 Minuten werden unter Kühlung und intensivem Rühren bei einer Innentemperatur von 30 bis 40°C 348 g 2,4-Diisocyanatotoluol (4 mol NCO) zugetropft. Danach wird 30 Minuten auf 60°C und weitere 60 Minuten auf 80°C erhitzt und das Reaktionsgemisch nach der Abdestillation der flüchtigen Komponenten bei 20 mbar und später 1 mbar durch Absaugen vom Salz befreit.

**Beispiel 11**

Vorgelegt wird ein Gemisch aus 194 g Tetraethylenglykol (2 mol Hydroxylgruppen), 0,5 g Katalysator aus Beispiel 1, gelöst in 10 ml DMF, 160 g Natriumhydroxid, 1 l Wasser und 1 g Mersolat H®. Innerhalb 60 Minuten werden 348 g 2,4-Diisocyanatotoluol (4 mol NCO-Gruppen) unter heftigem Rühren bei einer Innentemperatur von 20 bis 30°C zugegeben. 30 Minuten wird anschließend bei 60°C, 1 Stunde bei 80°C gerührt, dann vom Ungelösten abfiltriert, bei vermindertem Druck destilliert und dann erneut abgesaugt.

**Beispiel 12**

Arbeitet man wie in Beispiel 11, jedoch mit 240 g anstelle von 160 g Natriumhydroxid, so erhält man ein Produkt mit den in der Tabelle angegebenen Daten.

**Beispiel 13**

Vorgelegt wird eine Mischung aus 1,5 kg eines auf Trimethylolpropan gestarteten Polyethertriols mit 78 Gew.-% Propylenoxid-Einheiten und 22 Gew.-% endständig angeordneten Ethylenoxid-Einheiten der OH-Zahl 27 (0,75 mol Hydroxylgruppen), 0,75 g Katalysator aus Beispiel 1 in 10 ml DMF, 40 g Natriumhydroxid (1 mol OH⁻), 100 g Wasser, 100 g Aceton und 0,1 g Mersolat H®. Bei einer Innentemperatur von 20 bis 30°C werden unter heftigem Rühren innerhalb von 30 Minuten 87 g 2,4-Diisocyanato-toluol zugegeben. Danach wurde 2 Stunden auf 60°C erhitzt, wobei sich die Viskosität des Produktgemisches stark verringerte. Das Reaktionsgemisch wurde noch heiß abgesaugt, die flüchtigen Bestandteile abdestilliert und erneut filtriert.

**Beispiel 14**

Arbeitet man wie in Beispiel 13, jedoch mit 2 kg Polyethertriol anstelle von 1,5 kg, so erhält man ein Produkt mit den in der Tabelle angegebenen Daten.

**Beispiel 15**

Arbeitet man wie in Beispiel 13, jedoch mit 1 kg Polyethertriol anstelle von 1,5 kg, so erhält man ein Produkt mit den in der Tabelle angegebenen Daten.

**Beispiel 16**

Vorgelegt wird eine Mischung aus 1,5 kg des Polyethertriols aus Beispiel 13, 0,75 g Katalysator aus Beispiel 1 in 10 ml DMF, 5 g Kaliumhydrogencarbonat, 50 g Wasser und 1 l Dimethylformamid. Bei einer Innentemperatur von 20 bis 30°C werden unter starkem Rühren 130,5 g 2,4-Diisocya-natotoluol (1,5 mol NCO-Gruppen) innerhalb 1 Stunde zugegeben. Dabei werden 7,2 l $CO_2$ frei. Anschließend wird 3 Stunden auf 100°C erhitzt und dann heiß abfiltriert. Das Filtrat bildet beim Abkühlen zwei Phasen aus, von denen die untere, aminische Phase abgetrennt, durch Destillation von Lösungsmittel- und Wasserresten befreit und dann nochmals zur Abtrennung geringster Mengen unlöslicher Stoffe filtriert wird. Die obere Phase wird verworfen.

**Tabelle 1**

Analysendaten der Polyamine

14

| | Beispiel- Nr. | | | | | | | |
|---|---|---|---|---|---|---|---|---|
| | 1 | 2 | 3 | 4 | 5 | 6 | 7 | 8 |
| prim. Stickstoff [%][1] | 1,71 | 1,74 | 0,18 | 1,63 | 1,26 | 1,62 | 1,01 | 1,54 |
| NH-Zahl [mg KOH/g][2] | 68,5 | 69,6 | 6,4 | 65,2 | 49,2 | 64,9 | 40,15 | 61,65 |
| Gesamt-Stickstoff[%][3] | 2,57 | 2,53 | 1,88 | 2,40 | 2,35 | 3,22 | 1,76 | 2,62 |
| OH+NH-Zahl [mg KOH/g][4] | 97,95 | 100 | 46,9 | 92,9 | 82,2 | 82,2 | 68,35 | 85,85 |
| Säurezahl [mg KOH/g][5] | 0,03 | 0,09 | 0,2 | 0,1 | 0,3 | 0,6 | 0,3 | 0,4 |
| Viskosität [mPa.s] bei 30°C | 2500 | 3500 | 2220 | 3200 | 2900 | 2600 | 3400 | 4100 |

1) Titration mit Perchlorsäure
2) rechnerisch aus 1)
3) nach Kjeldahl
4) Acetanhydrid-Methode (24h/20°C, erfaßt OH- und NH$_2$-Gruppen)
5) wird bei 4) mitbestimmt
6) rotationsviskosimetrisch

**Tabelle 1 (Fortsetzung)**

Analysendaten der Polyamine

| | Beispiel- Nr. | | | | | | | |
|---|---|---|---|---|---|---|---|---|
| | 9 | 10 | 11 | 12 | 13 | 14 | 15 | 16 |
| prim. Stickstoff [%][1] | 1,74 | 1,87 | 9,16 | 10,6 | 0,62 | 0,47 | 1,05 | 0,39 |
| NH-Zahl [mg KOH/g][2] | 69,7 | 74,95 | 367,4 | 425 | 24,8 | 18,83 | 42,15 | 15,6 |
| Gesamt-Stickstoff[%][3] | 2,36 | 2,53 | 11,56 | 12,21 | 1,19 | 0,78 | 1,38 | 1,24 |
| OH+NH-Zahl [mg KOH/g.] [4] | 99,15 | 114 | 548 | 572 | 42,1 | 32,6 | 51,15 | 40,25 |
| Säurezahl [mg KOH/g][5] | 0,7 | 0,1 | 2,4 | < 0,1 | 0,1 | 0,05 | 0,02 | 0,2 |
| Viskosität [mPa.s] bei 30°C[6] | 6000 | 5300 | 1780 | 200 | 500 | 630 | 2300 | 1400 |

1) Titration mit Perchlorsäure
2) rechnerisch aus 1),
3) nach Kjeldahl
4) Acetanhydrid-Methode (24h/20°C, erfaßt OH- und NH$_2$-Gruppen)
5) wird bei 4) mitbestimmt
6) rotationsviskosimetrisch

**Tabelle 2**

Tabelle 2

| | $OH:OH^-:NCO$ [1] | $(OH+NH)$-Zahl [2] /mg KOH/g/ | ideali- sierte NH-Zahl [3] /mg KOH/g/ | aus Werten der Tab. 1 berechnete % mono- meres Diamin [4] | theoret. Werte (o.Urethanbildung) % mono- meres Diamin [5] | prim/sek [6] -OH-Gruppen in B) |
|---|---|---|---|---|---|---|
| Beispiel 1 | 1 : 2 : 2 | 149,7 | 49,9 | 2,27 | 20,9 | prim. |
| Beispiel 2 | 1 : 2 : 2 | 149,7 | 49,9 | 2,51 | 23,1 | prim. |
| Beispiel 3 | 1 : 2 : 2 | 149,7 | 49,9 | 0 | - | prim. |
| Beispiel 4 | 1 : 2 : 2 | 149,7 | 49,9 | 2,29 | 21,1 | prim. |
| Beispiel 5 | 1 : 2 : 2 | 149,7 | 49,9 | 0,45 | 4,14 | prim. |
| Beispiel 6 | 1 : 2,67 : 2,67 | 176,6 | 80,2 | 0,05 | 0,36 | prim. |
| Beispiel 7 | 2 : 2,67 : 2,67 | 120,8 | 24,7 | 0,69 | 9,17 | prim. |
| Beispiel 8 | 1 : 2 : 2 | 149,7 | 49,9 | 1,20 | 11,0 | prim. |
| Beispiel 9 | 1 : 2 : 2 | 149,7 | 49,9 | 2,98 | 18,0 | prim. |
| Beispiel 10 | 1 : 2 : 2 | 149,7 | 49,9 | 3,2 | 29,4 | sek. |
| Beispiel 11 | 1 : 2 : 2 | 767,1 | 255 | 18,0 | 32,3 | prim. |
| Beispiel 12 | 1 : 3 : 2 | 767,1 | 255 | 23,9 | 42,9 | prim. |
| Beispiel 13 | 0,75 : 1 : 1 | 61,8 | 25,4 | 0,13 | 3,33 | prim. |
| Beispiel 14 | 1 : 1 : 1 | 99,95 | 0 | 0,43 | 14,5 | prim. |
| Beispiel 15 | 1 : 2 : 2 | 78,22 | 25,5 | 1,91 | 33,2 | prim. |
| Beispiel 16 | 1 : 2 | 78,22 | 25,5 | 0 | - | prim. |

Erklärungen zu Tabelle 2:

1) Äquivalentverhältnis von Hydroxylgruppen zu Hydroxidgruppen zu NCO-Gruppen

2) Summen an OH-Zahl und NH-Zahl, wie sie sich ergeben, wenn keinerlei Urethanisierung stattgefunden hat und alle NCO-Gruppen in $NH_2$-Gruppen umgewandelt worden sind.

3) NH-Zahl, wie sie sich ergibt, wenn man ein "ideales" NCO-Prepolymer im unter 1) angegebenen Verhältnis herstellt und alle NCO-Gruppen dieses "idealen" Prepolymers in Aminogruppen umwandelt (rechnerisch).

4) Anteil an monomerem Diamin im isolierten Reaktionsproprodukt in Gew.-% (rechnerisch aus experimentellen Daten von Tab. 1).

5) Anteil an monomeren Diamin, bezogen auf eingesetztes Diisocyanat ($\hat{=}$ 100 Gew.-%) in Gew.-% (rechnerisch, wenn keine Urethanisierungsreaktion stattgefunden und alles Diisocyanat in monomeres Diamin umgewandelt wäre).

6) Primärer oder sekundärer Charakter der OH-Gruppen des eingesetzten Polyols B)

Tabelle 1) gibt experimentelle Werte, an den Reaktionsprodukten bestimmt, wieder;

Tabelle 2) enthält zumeist theoretisch errechnete Werte unter verschiedenen Annahmen:

2) es wäre keine Urethan-Reaktion eingetreten

3) vollständige Urethanreaktion zum NCO-Prepolymer vor Hydrolyse

5) erwarteter Diamin-Gehalt, wenn nach Annahme 3) alles Diisocyanat in monomeres Diamin verseift würde.

## Patentansprüche

1) Verfahren zur Herstellung von höhermolekularen, über Urethangruppen mit Segmenten aus höhermolekularen Polyether-, Polyester-, Polycarbonat- oder Polyacetalpolyolen und gegebenenfalls Resten von niedermolekularen Verbindungen mit gegenüber Isocyanaten reaktiven Endgruppen verknüpften aromatischen Polyaminen durch basische Hydrolyse von Isocyanatverbindungen, dadurch gekennzeichnet, daß man

A) in einem Eintopfverfahren bei Temperaturen von -20 bis +175° C,

a) Polyisocyanate, vorzugsweise Diisocyanate, mit einem NCO-Gehalt von 21 bis 52,5 Gew.-% und vorzugsweise aromatisch gebundenen NCO-Gruppen,

b) höhermolekulare, zwei- oder mehrwertige Verbindungen mit gegenüber Isocyanaten reaktiven Gruppen, einem Molekulargewicht zwischen 400 und 10 000, gegebenenfalls in Gegenwart von

c) niedermolekularen, zwei- oder mehrwertigen, gegenüber Isocyanaten reaktiven Verbindungen, mit einem Molekulargewicht von 62 bis 399, mit

d) überschüssigen Mengen an Wasser, bezogen auf die NCO-Gruppen, gegebenenfalls in Gegenwart von

e) zumindest teilweise mit Wasser mischbaren Lösungsmitteln

und in Gegenwart von

f) Alkalihydroxiden, Erdalkalioxiden, Erdalkalihydroxiden, Alkalicarbonaten, Erdalkalicarbonaten, Alkalihydrogencarbonaten, Alkali- und Erdalkalicarboxylaten einwertiger Carbonsäuren, Ammoniumcarbonat, Ammoniumhydrogencarbonat, Ammoniumcarboxylaten und Tetra-($C_1$-$C_{18}$-alkyl)ammoniumcarbonat, -hydrogencarbonat, -carboxylaten und -hydroxid, Alkali- und Erdalkalisalzen von Kieselsäure, Blausäure, Cyansäure, Thiocyansäure, Isocyansäure, Isothiocyansäure und Schwefelwasserstoff, die in Wasser stark

16

basisch reagieren, als basische Katalysatoren in einem NCO/XH-Äquivalentverhältnis (X = O, NH) von a:b bzw. a:(b+c) = 0,1 bis 5, und in einem $H_2O$/NCO-Äquivalentverhältnis (d:a) von > 1:1, vermischt

B) gegebenenfalls das Reaktionsgemisch auf +20°C bis +175°C erwärmt und

C) das höhermolekulare Polyamin-Reaktionsprodukt durch Phasentrennung oder Extraktion aus dem Reaktionsgemisch oder vorzugsweise durch Abdestillieren flüchtiger Anteile aus dem Reaktionsgemisch als Rückstand isoliert.

2. Verfahren gemäß Anspruch 1, dadurch gekennzeichnet, daß das Äquivalentverhältnis der NCO-Gruppen zu der Gesamtheit der NCO-reaktiven Gruppen aus b) + c) 0,5-2 beträgt.

3. Verfahren gemäß Anspruch 1 und 2, dadurch gekennzeichnet, daß als Polyisocyanate aromatische Polyisocyanate und als höhermolekulare, zwei- oder mehrwertige Verbindungen mit gegenüber Isocyananten reaktionsfähigen Gruppen des Molekulargewichtsbereichs 400-10 000 Polyether-, Polyester-, Polycarbonate und Polyacetalpolyole eingesetzt werden.

4. Verfahren gemäß Ansprüchen 1-3, dadurch gekennzeichnet, daß als Wasser zumindest teilweise mischbare Lösungsmittel Ketone, Carbonsäuredialkylamide und Lactame, Nitrile und Ether verwendet werden.

5. Verfahren nach Ansprüchen 1-4, dadurch gekennzeichnet, daß als basische Katalysatoren Natriumhydroxid, Kaliumhydroxid, Ammoniumcarbonat, Ammoniumhydrogencarbonat, Ammoniumcarboxylate einwertiger Carbonsäuren, Tetra-($C_1$-$C_{18}$-Alkyl)-ammonium-carbonat, -hydrogencarbonat, -carboxylate und -hydroxide, schwerlösliche basische Aluminiumoxide oder basische Ionenaustauscherharze verwendet werden.

6. Verfahren gemäß Ansprüchen 1-5, dadurch gekennzeichnet, daß als basische Katalysatoren Alkalihydroxide in Mengen von 0,1 bis 10 Äquivalenten Hydroxidgruppen pro Äquivalent NCO-Gruppen verwendet werden.

7. Verfahren gemäß Ansprüchen 1-6, dadurch gekennzeichnet, daß noch g) ein Urethanisierungskatalysator auf Basis von Zinn-, Blei oder Wismut-Verbindungen mitverwendet wird.

8. Verfahren gemäß Ansprüchen 1-5 und 7, dadurch gekennzeichnet, daß man in homogener Phase unter Verwendung von Lösungsmitteln Alkalicarbonate, Alkalihydrogencarbonate oder Alkalicarboxylate einwertiger Carbonsäuren als basische Katalysatoren verwendet.

9. 0,1-25 Gew.-% Aminogruppen aufweisende Reaktionsprodukte erhalten nach Verfahren gemäß Ansprüchen 1-8.

10. Verwendung der Reaktionsprodukte nach Anspruch 8 als Ausgangskomponente bei der Herstellung von Polyurethanen nach dem Polyisocyanat-Polyadditionsverfahren.

**Claims**

1. Process for the production of relatively high molecular weight aromatic polyamines linked by way of urethane groups to segments of relatively high molecular weight polyether, polyester, polycarbonate or polyacetal polyols and optionally radicals of low molecular weight compounds containing end groups which are reactive towards isocyanates by alkaline hydrolysis of isocyanate compounds, characterised in that

A) in a one-shot process at temperatures of -20 to +175°C,

a) polyisocyanates, preferably diisocyanates, having an NCO content of 21 to 52.5 % by weight and preferably aromatically bound NCO groups,

b) relatively high molecular weight di- or multivalent compounds having groups which are reactive towards isocyanates, a molecular weight of between 400 and 10,000, optionally in the presence of

c) low molecular weight, di- or multivalent compounds which are reactive towards isocyanates, having a molecular weight of 62 to 399, are mixed with

d) excess quantities of water, based on the NCO groups, optionally in the presence of

e) at least partly water-miscible solvents and in the presence of

f) alkali metal hydroxides, alkaline earth metal oxides, alkaline earth metal hydroxides, alkali metal carbonates, alkaline earth metal carbonates, alkali metal hydrogen carbonates, alkali metal and alkaline earth metal carboxylates of monobasic carboxylic acids, ammonium carbonate, ammonium hydrogen carbonate, ammonium carboxylates and tetra-($C_1$-$C_{18}$-alkyl)ammonium carbonate, hydrogen carbonate, carboxylates and hydroxide, alkali metal and alkaline earth metal salts of silicic acid, hydrocyanic acid, cyanic acid, thiocyanic acid, isocyanic acid, isothiocyanic acid and hydrogen sulphide, which are strongly alkaline in reaction in water, as basic catalysts, in an NCO/XH equivalent ratio (X = O, NH) of a:b or a:(b+c) = 0.1 to 5, and in an $H_2O$/NCO equivalent ratio (d:a) of > 1:1,

B) the reaction mixture is optionally heated to +20°C to +175°C and

C) the relatively high molecular weight polyamine reaction product is isolated from the reaction mixture by phase separation or extraction or is preferably isolated in the form of a residue by distilling off volatile constituents from the reaction mixture.

2. Process according to Claim 1, characterised in that the equivalent ratio of the NCO groups to the total of NCO-reactive groups from b) + c) is 0.5-2.

3. Process according to Claim 1 and 2, characterised in that aromatic polyisocyanates are used as the polyisocyanates and polyether, polyester, polycarbonates and poyacetal polyols are used as the relatively high molecular weight, di- or multivalent compounds containing groups which are reactive towards isocyanates and having molecular weights in the range 400-10,000.

4. Process according to Claims 1-3, characterised in that ketones, carboxylic acid dialkylamides and lactams, nitriles and ethers are used as the as least partly water-miscible solvents.

5. Process according to Claims 1-4, characterised in that sodium hydroxide, potassium hydroxide, ammonium carbonate, ammonium hydrogen carbonate, ammonium carboxylates of monobasic carboxylic acids, tetra-($C_1$-$C_{18}$-alkyl)-ammonium carbonate, hydrogen carbonate, carboxylates and hydroxides, sparingly soluble basic aluminium oxides or basic ion exchanger resins are used as the basic catalysts.

6. Process according to Claims 1-5, characterised in that alkali metal hydroxides in quantities of 0.1 to 10 equivalents of hydroxide groups per equivalent of NCO groups are used as the basic catalysts.

7. Process according to Claims 1-6, characterised in that in addition g) a urethanisation catalyst based on tin, lead or bismuth compounds is also used.

8. Process according to Claims 1-5 and 7, characterised in that, in a homogeneous phase using solvents, alkali metal carbonates, alkali metal hydrogen carbonates or alkali metal carboxylates of monobasic carboxylic acids are used as basic catalysts.

9. Reaction products containing 0.1-25% by weight of amino groups, obtained by processes according to Claims 1-8.

10. Use of the reaction products according to Claim 8 as a starting component in the production of polyurethanes by the polyisocyanate polyaddition process.

## Revendications

1. Procédé de fabrication de polyamines aromatiques à poids moléculaire élevé reliées par l'intermédiaire de groupes uréthane à des segments de polyéther-, polyester-, polycarbonate- ou polyacétal-polyols à poids moléculaire élevé et éventuellement à des radicaux de composés à poids moléculaire inférieur avec groupes tarminaux réactifs envers les isocyanates par hydrolyse basique de composés isocyanatés, caractérisé en ce que

A) dans un procédé en un seul récipient, à des températures de -20 à +175°C, on mélange

a) des polyisocyanates, de préférence des diisocyanates, ayant une teneur en NCO de 21 à 52,5 % en poids et avec groupes NCO liés de préférence aromatiquement,

b) des composés à poids moléculaire élevé di- ou polyvalents avec groupes réactifs envers les isocyanates et avec un poids moléculaire entre 400 et 10.000, éventuellement en présence

c) de composés à poids moléculaire inférieur di- ou polyvalents, réactifs envers les isocyanates et ayant un poids moléculaire de 62 à 399, avec

d) des quantités excédentaires d'eau par rapport aux groupes NCO, éventuellement en présence

e) de solvants au moins partiellement miscibles avec l'eau et en présence

f) d'hydroxydes alcalins, d'oxydes alcalinoterreux, d'hydroxydes alcalino-terreux, de carbonates alcalins, de carbonates alcalinoterreux, d'hydrogénocarbonates alcalins, de carboxylates alcalins et alcalino-terreux d'acides carboxyliques monovalents, de carbonate d'ammonium, d'hydrogénocarbonate d'ammonium, de carboxylates d'ammonium et de carbonate, hydrogénocarbonate, carboxylates et hydroxyde de tétra-(alcoyl-en $C_1$-$C_{18}$)-ammonium, de sels alcalins et alcalino-terreux d'acide silicique, d'acide hydrocyanique, d'acide cyanique, d'acide thiocyanique, d'acide isocyanique, d'acide isothiocyanique et d'hydrogène sulfuré qui ont une forte réaction basique dans l'eau, en tant que catalyseurs basiques,

dans un rapport d'équivalence NCO/XH (X = O, NH) de

a:b ou a:(b + c) de 0,1 à 5,

et dans un rapport d'équivalence $H_2O$/NCO (d:a) supérieur à 1:1,

B) on chauffe éventuellement le mélange de réaction à +20°C à +175°C et

C) on isole sous forme de résidu le produit de réaction polyaminé à poids moléculaire élevé par séparation de phases ou par extraction à partir du mélange de réaction ou de préférence par séparation distillatoire des constituants volatils à partir du mélange de réaction.

2. Procédé selon la revendication 1, caractérisé en ce que le rapport d'équivalence des groupes NCO envers l'ensemble des groupes réactifs envers les NCO de b) + c) s'élève à 0,5 à 2.

3. Procédé selon les revendications 1 et 2, caractérisé en ce qu'on utilise comme polyisocyanates des polyisocyanates aromatiques et comme composés à poids moléculaire élevé di- ou polyvalents comportant des groupes réactifs envers les isocyanates et se situant dans un intervalle de poids moléculaires de 400 à 10.000, des polyéther-, polyester-, polycarbonate- et polyacétal-polyols.

4. Procédé selon les revendications 1 à 3, caractérisé en ce qu'on utilise comme solvants tout au moins partiellement miscibles avec l'eau des cétones, des dialcoylamides d'acides carboxyliques et des lactames, nitriles et éthers.

5. Procédé selon les revendications 1 à 4, caractérisé en ce qu'on utilise comme catalyseurs basiques de l'hydroxyde de sodium, hydroxyde de potassium, carbonate d'ammonium, hydrogénocarbonate d'ammonium, carboxylates d'ammonium d'acides carboxyliques monovalents, carbonate, hydrogénocarbonate, carboxylates et hydroxydes de tétra-(alcoyl en $C_1$-$C_{18}$)-ammonium, oxydes d'aluminium basiques difficilement solubles ou résines échangeuses d'ions basiques.

6. Procédé selon les revendications 1 à 5, caractérisé en ce qu'on utilise comme catalyseurs basiques des hydroxydes alcalins en des quantités de 0,1 à 10 équivalents de groupes hydroxyde par équivalent de groupes NCO.

7. Procédé selon les revendications 1 à 6, caractérisé en ce qu'on utilise conjointement en plus g) un catalyseur d'uréthanisation à base de composés d'étain, de plomb ou de bismuth.

8. Procédé selon les revendications 1 à 5 et 7, caractérisé en ce qu'on utilise comme catalyseurs basiques en phase homogène avec emploi de solvants des carbonates alcalins, hydrogénocarbonates alcalins ou carboxylates alcalins d'acides carboxyliques monovalents.

9. Produits de réaction présentant 0,1 à 25 % en poids de groupes amino, obtenus par le procédé selon les revendications 1 à 8.

10. Utilisation des produits de réaction selon la revendication 9 comme composant de départ dans la fabrication de polyuréthanes par le procédé de polyaddition aux polyisocyanates.